(19) Europäisches Patentamt
European Patent Office
Office européen des brevets

(11) EP 1 190 003 B2

(12) NEUE EUROPÄISCHE PATENTSCHRIFT

(45) Veröffentlichungstag und Bekanntmachung des Hinweises auf die Entscheidung über den Einspruch:
**30.11.2005 Patentblatt 2005/48**

(45) Hinweis auf die Patenterteilung:
**18.12.2002 Patentblatt 2002/51**

(21) Anmeldenummer: **00927227.9**

(22) Anmeldetag: **22.05.2000**

(51) Int Cl.[7]: **C09D 175/04**, C08G 18/38, C08G 18/62, C08G 18/80, C09D 133/06, C09D 5/04, C08K 3/36

(86) Internationale Anmeldenummer:
**PCT/EP2000/004621**

(87) Internationale Veröffentlichungsnummer:
**WO 2000/071630 (30.11.2000 Gazette 2000/48)**

(54) **BESCHICHTUNGSSTOFF MIT EINER MISCHUNG AUS MINDESTENS EINEM NETZMITTEL UND HARNSTOFFEN UND/ODER HARNSTOFFDERIVATEN ALS THIXOTROPIERMITTEL**

COATING MATERIAL COMPRISING A MIXTURE THAT CONSISTS OF AT LEAST ONE WETTING AGENT AND OF UREAS AND/OR OF UREA DERIVATIVES SERVING AS THIXOTROPIC AGENTS

SUBSTANCE DE REVETEMENT COMPORTANT UN MELANGE CONSTITUE D'AU MOINS UN AGENT MOUILLANT ET D'UREES ET/OU DE DERIVES D'UREE EN TANT QU'AGENT THIXOTROPE

(84) Benannte Vertragsstaaten:
**DE ES FR IT**

(30) Priorität: **25.05.1999 DE 19924171**

(43) Veröffentlichungstag der Anmeldung:
**27.03.2002 Patentblatt 2002/13**

(73) Patentinhaber: **BASF Coatings Aktiengesellschaft**
**48165 Münster (DE)**

(72) Erfinder:
- **BAUMGART, Hubert**
  **D-48163 Münster (DE)**
- **SCHULZE-FINKENBRINK, Guido**
  **D-48163 Münster (DE)**

(74) Vertreter: **Fitzner, Uwe**
**Hauser Ring 10**
**40878 Ratingen (DE)**

(56) Entgegenhaltungen:
**EP-A- 0 154 678** **EP-A- 0 959 086**
**DE-A- 4 310 413**

- **PATENT ABSTRACTS OF JAPAN vol. 013, no. 205 (C-595), 15. Mai 1989 (1989-05-15) & JP 01 024851 A (MITSUI TOATSU CHEM INC), 26. Januar 1989 (1989-01-26)**
- **DATABASE WPI Section Ch, Week 198247 Derwent Publications Ltd., London, GB; Class A12, AN 1982-01817J XP002145613 & SU 899 614 A (CHEM IND RES DES IN), 23. Januar 1982 (1982-01-23)**
- **"Additives for Automotive Coatings" (Byk Chemie) September 1998**

EP 1 190 003 B2

## Beschreibung

Die Erfindung betrifft einen Beschichtungsstoff enthaltend ein Bindemittel und ein Vernetzungsmittel sowie ein Thixotropierungsmittel, ein Verfahren zur Herstellung eines solchen Beschichtungsstoffs, eine Verwendung eines solchen Beschichtungsstoffs für die Herstellung für die Herstellung von Klarlackierung und ein Verfahren zur Herstellung von Klarlackierungen im Rahmen der Herstellung farb- und/oder effektgebender Mehrschichtlackierungen.

Beschichtungsstoffe mit Thixotropierungsmitteln sind bekannt. In den Literaturstellen EP-A-192 304, DE-A-23 59 923, DE-A-18 05 693, WO 94/22968 und DE-C-27 51 761 sind Beschichtungsstoff beschrieben, welche als Thixotropierungsmittel Harnstoffderivate enthalten. Andererseits sind beispielsweise in den Literaturstellen WO 97/12945 und "farbe + lack", 11/1992, Seiten 829 ff., Beschichtungsstoffe beschrieben, welche als Thixotropierungsmittel modifizierte, hydrophile oder hydrophobe Kieselsäuren enthalten. In dieser Literaturstelle sind auch Harnstoffderivate als Alternative beiläufig erwähnt. Aus der Literaturstelle US-A-4,169,930 sind Umsetzungsprodukte aus Kieselsäure und Aminen, beispielsweise Harnstoff zur Verwendung in Beschichtungsstoffen bekannt. Schließlich sind in der Literaturstelle DE-A-37 26 959 Beschichtungsstoffe bekannt, welche Harnstoff in gelöster Form enthalten. Aufgrund der Tatsache, daß der Harnstoff gelöst ist, dürfte dieser nicht die Funktion eines Thixotropierungsmittels erfüllen.

Mit dem Einsatz von Thixotropierungsmitteln in Beschichtungstoffen soll unter anderem die Applikation von vergleichsweise dicken Lackschichten ermöglicht werden, ohne daß es zu störender "Läuferbildung" kommt. Insbesondere im Fall von nichtwäßrigen Lacken, die ein Thixotropierungsmittel auf Basis von Harnstoffderivaten enthalten, werden, jedenfalls bei hohen Feststoffgehalten, Lackoberflächen erhalten, die hinsichtlich ihres optischen Erscheinungsbildes (insbesondere Verlauf und Glanz) unbefriedigend sind. Thixotropierungsmittel auf Basis von Kieselsäuren liefern Beschichtungstoff, welche ebenfalls hinsichtlich Verlauf nicht befriedigen, zudem aber auch zu nicht ausreichend schwitzwasserresistenten (Weißanlaufen durch Wassereinlagerung) Lackierungen führen. Insbesondere im Falle der Thixotropierungsmittel auf Harnstoffbasis ist zudem die Lagerstabilität unbefriedigend.

Wesentliches Merkmal von Thixotropierungsmitteln ist, daß die Viskosität eines damit hergestellten Lackes von der Vorgeschichte des Fließens abhängt und/oder daß die Thixotropierungsmittel strukturviskos sind, i.e., daß die Viskosität des Lackes mit steigender Scherbeanspruchung abnimmt. Ausgehend von einer Grundviskosität nimmt während einer Scherbeanspruchung die Viskosität ab und geht nach Beendigung der Scherbeanspruchung erst allmählich auf den Ausgangswert zurück. Ein thixotropes Gel beispielsweise verflüssigt sich durch Eintrag mechanischer Energie (Rühren oder dergleichen) und verfestigt sich nach Abschluß des Energieeintrags erst allmählich wieder. Strukturviskose bzw. thixotrope Eigenschaften sind für die Lackverarbeitung vorteilhaft. Insbesondere kann die Neigung zur Läuferbildung bei Auftrag eines Lackes mit hoher NaBschichtdicke kontrolliert und reduziert werden. Andererseits dürfen Thixotropierungsmittel die optischen und chemischen Eigenschaften eines damit hergestellten fertigen Überzuges nicht negativ beeinflussen. Thixotropierungsmittel sind in aller Regel partikulär und in einem Beschichtungstoff, sei es wäßrig oder nichtwäßrig, dispergiert. Im Falle der Harnstoffderivate sind dies nadelförmige, zum Teil helixartig verdrillte Kristalle, wobei vorzugsweise eine Teilchengrößenverteilung zwischen 0,1µm und 6µm (95-99% der Teilchen, bezogen auf das Volumen) eingerichtet ist und 80% der Kristalle (bezogen auf die Anzahl) kleiner als 2µm sind. Im Falle der Kieselsäuren beträgt die Mahlfeinheit im fertigen Beschichtungstoff typscherweise weniger als 10µm nach DIN ISO 1524. Die Primärteilchengröße von pyrogenen Kieselsäuren liegt meist im Bereich von 5 bis 20 nm.

Die Teilchen der Thixotropierungsmittel, insbesondere der Thixotropierungsmittel auf Basis von Harnstoffderivaten, neigen zum Absetzen und/oder Verklumpen, wodurch die wenig befriedigende Lagerstabilität gegeben ist. Ferner sind aus EP-A- 0 959 086 und information von Byk Chemie "Additives for Automotive Coatings" (1998) Beschichtungsstoffe enthaltend Additive und Polyester als Bindemittel bekannt.

Der Erfindung liegt daher das technische Problem zugrunde, einen Beschichtungstoff anzugeben, welcher einerseits eine reduzierte Neigung zur Läuferbildung aufweist und gleichzeitig allen Anforderungen, insbesondere hinsichtlich guter Lagerstabilität, genügt.

Zur Lösung dieses technischen Problems lehrt die Erfindung, daß der Beschichtungstoff zusätzlich ein die Benetzbarkeit des Thixotropierungsmittels verbesserndes Netzmittel und ein Polyacrylatharz als Bindemittel enthält.

Überraschenderweise führt der Einsatz an sich bekannter Netzmittel zu einer beachtlichen Verbesserung der Lagerstabilität der Beschichtungsstoffe. Hierbei ist wesentlich, daß das Netzmittel zur Benetzung der Teilchen des Thixotropierungsmittels geeignet und insofern abgestimmt ist. Des weiteren überraschte, daß die erfindungsgemäße Kombination von Netzmittel und Thixotropiermittel zu einem Beschichtungsstoff führt, welcher sowohl eine reduzierte Neigung zur Läuferbildung aufweist, als auch zu Klarlackierungen, die hinsichtlich Verlauf und Schwitzwasserbeständigkeit vollauf befriedigen: Es lassen sich an vertikalen Substratflächen Trockenfilmdicken von bis zu 50µm und mehr ohne Läuferbildung herstellen. Dies gilt sowohl für Ein- und Mehrkomponentensysteme.

Im Rahmen dervorliegenden Erfindung ist unter einem Einkomponenten(K)-System ein thermisch härtender Beschichtungsstoff zu verstehen, bei dem das Bindemittel und das Vernetzungsmittel nebeneinander, d.h. in einer Komponente, vorliegen. Voraussetzung hierfür ist, daß die beiden Bestandteile erst bei höheren Temperaturen und/oder bei Bestrahlen mit aktinischer Strahlung miteinander vernetzen.

Der Beschichtungsstoff kann des weiteren ein Zweikomponenten(2K)- oder Mehrkomponenten(3K, 4K)-System sein.

Im Rahmen der vorliegenden Erfindung ist hierunter ein Beschichtungsstoff zu verstehen, bei dem insbesondere das Bindemittel und das Vernetzungsmittel getrennt voneinander in mindestens zwei Komponenten vorliegen, die erst kurz vor der Applikation zusammengegeben werden. Diese Form wird dann gewählt, wenn Bindemittel und Vernetzungsmittel bereits bei Raumtemperatur miteinander reagieren. Beschichtungsstoffe dieser Art werden vor allem zur Beschichtung thermisch empfindlicher Substrate, insbesondere in der Autoreparaturlackierung, angewandt.

Als gut geeignet haben sich an sich aus der Patentschrift EP 0 154 678 A1 bekannte Netzmittel erwiesen.

Diese Netzmittel sind dadurch erhältlich sein, daß Polyisocyanate mit einer mittleren Funktionalität von 2,5 bis 6 in einer ersten Stufe a) mit Monohydroxyverbindungen der Formel Y-OH umgesetzt werden. Hierbei bezeichnet Y

i) ein aliphatisches und/oder cycloaliphatisches $C_8$-$C_{30}$ Kohlenwasserstoffradikal, ggf. mit durch Halogenatome und/oder Arylresten substituierten Wasserstoffatomen, und/oder

ii) ein aliphatisches und/oder cycloaliphatisches und/oder aromatisches-Radikal, welches zumindest eine -O- und/ oder -COO- Gruppe enthält und ein Molekulargewicht von 350 bis 8000 aufweist, ggf. mit durch Halogenatome und/oder Arylresten substituierten Wasserstoffatomen,

Die Polyisocyanate und die Monohydroxyverbindungen werden in einer solchen Menge umgesetzt werden, daß 15 bis 50%, vorzugsweise 20 bis 40% oder 20 bis 35% der NCO-Gruppen umgesetzt sind.

In einerzweiten Stufe b) wird das erhaltene Reaktionsprodukt mit Verbindungen der Formel $G\text{-}(E)_n$ umgesetzt. Hierbei bedeutet E -OH, $-NH_2$ und/oder -NHR mit R = $C_1$-$C_4$-Alkyl; n ist gleich 2 oder 3; G ist ein aliphatisches und/ oder cycloaliphatisches Kohlenwasserstoffradikal mit zumindest zwei C-Atomen und mit einem Molekulargewicht von höchstens 3000, wobei G eine -O-, COO-, CONH- -S- und/oder $-SO_2$ Gruppe enthalten kann.

Die Mengenverhältnisse werden hierbei so gewählt, daß weitere 15 bis 45%, vorzugsweise 20 bis 40% oder 20 bis 35% der NCO-Gruppen der ursprünglich eingesetzten Polyisocyanate umgesetzt sind und die Summe der in den Stufen a) und b) umgesetzten NCO-Gruppen 40 bis 75%, vorzugsweise 45 bis 65% oder 45 bis 55% NCO-Gruppen der ursprünglich eingesetzten Polyisocyanate beträgt.

In der dritten Stufe c) wird das in Stufe b) erhaltene Reaktionsprodukt mit Verbindungen der Formel Z-Q umgesetzt. Hierin bedeutet Q -OH, NH2, -NHR, mit R = $C_1$-$C_4$-Alkyl, oder -SH; Z ist $C_2$-$C_{10}$-Alkyl mit mindestens einer tertiären Amingruppe oder eine heterocyclische Gruppe mit mindestens einem basischen Ringstickstoffatom, welches kein Wasserstoffatom trägt, wobei die heterocyclische Gruppe über eine Alkylengruppe mit bis zu 10 C-Atomen an Q gebunden sein kann.

Die Mengenverhältnisse werden hierbei so gewählt, daß auf jede verbleibende in den Stufen a) und b) noch nicht umgesetzte Isocyanatgruppe mindestens ein Molekül der Verbindung Z-Q entfällt.

Bezüglich der einsetzbaren konkreten Stoffe wird ausdrücklich auf die Literaturstelle EP 0 154 678 A1 verwiesen.

Weitere gut geeignete Netzmittel werden unter den Handelbezeichnungen Disperbyk® 361 von der Firma Byk, Borchigen® von der Firma Bayer AG und Tego Disperse® 710 von der Firma Tego Chemie Services vertrieben.

Es ist bevorzugt, daß das Harnstoffderivat erhältlich ist durch Umsetzung einer isocyanatgruppenhaltigen Verbindung, vorzugsweise einem Diisocyanat, mit einem primären oder sekundären Amin oder einer Mischung solcher Amine und/oder Wasser, vorzugsweise mit einem aliphatischen, primären Monoamin. Harnstoff bzw. das Harnstoffderivat wird in einer Menge von 0,1 bis 5 Gew.-%, vorzugsweise 0,2 bis 2,5 Gew.-%, höchstvorzugsweise 0,6 bis 2,0 Gew.-%, bezogen auf den Gesamtfeststoffgehalt des Beschichtungsstoffs, eingesetzt.

Die in den nichtwäßrigen Lacken eingesetzten harnstoffgruppenhaltigen Thixotropierungsmittel werden vorzugsweise durch Umsetzung von Monoaminen oder Mischungen aus Monoaminen mit Polyisocyanaten oder Mischungen aus Polyisocyanaten hergestellt, wobei die Monoamine und die Polyisocyanate in solchen Mengen miteinander umgesetzt werden, daß das Äquivalentverhältnis zwischen Aminogruppen und Isocyanatgruppen zwischen 1,2 und 0,4, vorzugsweise zwischen 1,0 und 0,8 liegt.

Als Monoamine werden vorzugsweise primäre Monoamine, besonders bevorzugt araliphatische oder aliphatische primäre Monoamine, ganz besonders bevorzugt aliphatische primäre Monoamine mit mindestens 6 C-Atomen im Molekül eingesetzt. Als Beispiele für einsetzbare Monoamine werden genannt: Benzylamin, Ethylamin, n-Propylamin, Isopropylamin, n-Butylamin, Isobutylamin, tert. -Butylamin, Pentylamin, n-Hexylamin, n-Octylamin, iso-Nonanylamin, iso-Tridecylamin, n-Decylamin und Stearylamin. Ebenso sind primäre und sekundäre Amine einsetzbar, welche Ethergruppen enthalten. Es handelt sich um Stoffe der allgemeinen Formel $(CH_3\text{-}(CH_2)_a\text{-}O\text{-}(CH_2)_b)_cNH_d$, wobei a eine ganze Zahl von 0 bis 10, b eine ganze Zahl von 1 bis 20, c 1 oder 2 ist und die Summe aus c und d stets 3 beträgt. Vorzugsweise sind a = 0, b = 3, c = 1 und d = 2.

Für die in der isocyanatgruppenhaltige Komponente verwendeten Polyisocyanate können im Prinzip all mindestens zwei Isocyanatgruppen pro Molekül enthaltende organischen Verbindungen eingesetzt werden. Es können auch isocyanatgruppenhaltige Reaktionsprodukte aus beispielsweise Polyolen und Polyaminen und Polyisocyanaten eingesetzt werden. Vorzugsweise werden Diisocyanate, ganz besonders bevorzugt aliphatische Diisocyanate, insbesondere Hexamethylendiisocyanat eingesetzt. Als Beispiel für einsetzbare Polyisocyanate werden genannt: Tetramethylen-1,4-diisocyanat, Hexamethylen-1,6-diisocyanat, omega,omega'-Dipropyl-äther-diisocyanat, Cyclohexyl-1,4-diisocyanat, Dicyclohexylmethan-4,4'-diisocyanat, 1, 5-Dimethyl-2,4-di(isocyanato-methyl)-benzol, 1,5-Di-methyl-2,4-di (isocyanatoethyl)-benzol, 1,3,5-Trimethyl-2,4-di(isocyanatomethyl)-benzol, 1,3,5-Triethyl-2,4-di(isocyanatomethyl)-benzol, das Trimere des Hexamethylen-1,6-diisocyanats, Isophorondiisocyanat, Dicyclohexyldimethylmethan-4,4'-diisocyanat, 2,4-Toluylendiisocyanat, 2,6-Toluylendiisocyanat, Diphenylmethan-4,4'-diisocyanat. Weitere Beispiele geeigneter Polyisocyanate und Diisocyanate sind nachstehend bei den als Vernetzungsmittel verwendeten Polyisocyanaten und Diisocyanaten aufgeführt.

Weitere Beispiele geeigneter Polyisocyanate sind

Ia) Isocyanate mit mindestens einer Diisocyanat-Struktureinheit, welche

i) eine ungesättigte bzw. aromatische oder nicht aromatische Ringstruktur mit 5 - 10 Ringatomen und
ii) zwei an die Ringstruktur gebundene Isocyanatgruppen aufweist, wobei
iii) im Falle einer nicht aromatischen Ringstruktur

a) beide Isocyanatgruppen über lineares $C_1$-$C_9$-Alkyl und/oder lineares $C_2$-$C_{10}$-Etheralkyl oder

b) eine Isocyanatgruppe direkt und die andere über lineares $C_2$-$C_9$-Alkyl und/oder lineares $C_2$-$C_{10}$-Etheralkyl und

iv) im Fall einer ungesättigten aromatischen Ringstruktur mindestens eine der beiden Isocyanatgruppen über lineares $C_2$-$C_9$-Alkyl und/oder lineares $C_2$-$C_{10}$-Etheralkyl, welche beiden Reste keine benzylischen Wasserstoffatome aufweisen, mit der Ringstruktur verbunden ist oder sind;

und/oder

Ib) zumindest eines Oligomers dieses Isocyanats Ia) mit 2 bis 10 Isocyanateinheiten, insbesondere ein Trimer; und/oder

Ic) mindestens eines partiell blockiertes Isocyanats Ia) und/oder mindestens eines partiell blockiertes Oligomeren Ib)

Die Isocyanate la) können die können zwei oder mehr dieser Diisocyanat-Struktureinheiten aufweisen, indes hat es sich bewährt, nur eine zu verwenden.

Bezüglich der Diisocyanat-Struktureinheit des Diisocyanats Ia) bestehen verschiedene Möglichkeiten derweiteren Ausbildung, die folgend beschrieben werden.

Hinsichtlich der Ringstruktur (i) ist es grundsätzlich möglich, daß es sich um Heteroringe handelt. Dann enthält die Ringstruktur (i) neben C-Atomen als Ringatome auch davon verschiedene Ringatome, wie beispielsweise N-Atome, O-Atome oder Si-Atome. Hierbei kann es sich um gesättigte oder ungesättigte bzw. aromatische Heteroringe handeln. Beispiele geeigneter gesättigter Heteroringe sind die Silacyclopentan-, Silacyclohexan-, Oxolan-, Oxan-, Dioxan-, Morpholin-, Pyrrolidin-, Imidazolidin-, Pyrazolidin-, Piperidin- oder Chinuklidinringe. Beispiele geeigneter ungesättigter bzw. aromatischer Heteroringe sind Pyrrol-, Imidazol-, Pyrazol-, Pyridin-, Pyrimidin-, Pyrazin-, Pyridazin- oder Triazinringe. Bevorzugt ist es, wenn die Ringstruktur (i) als Ringatome ausschließlich C-Atome enthält.

Die Ringstruktur (i) kann einerseits brückenfrei sein. In dem Fall, daß die Ringstruktur (i) ein bicyclisches Terpen-Grundgerüst, Decalin, Adamantan oder Chinuklidin ist, können jedoch Brücken enthalten sein. Beispiele geeigneter Terpen-Grundgerüste sind Caran-, Norcaran-, Pinan-, Camphan- oder Norbonan-Grundgerüste.

Die Wasserstoffatome einer Diisocyanat-Struktureinheit la), insbesondere der Ringstruktur (i), können durch Gruppen oder Atome substituiert sein, welche weder mit Isocyanaten noch mit dem Amin und/dem Bindemittel reagieren. Beispiele geeigneter Gruppen sind Nitro-, Alkyl-, Cycloalkyl-, Perfluoralkyl-, Perfluorcycloalkyl- oder Arylgruppen. Beispiele geeigneter Atome sind Halogenatome, insbesondere Fluor.

Vorteilhafterweise besteht die Ringstruktur (i) aus 6 C-Atomen, insbesondere in Form von Cyclohexan oder Benzol.

Beispiele für geeignetes lineares $C_1$-$C_9$-Alkyl sind Methylen- oder Ethylen- sowie Tri, Tetra-, Penta-, Hexa-, Hepta-, Octa- oder Nonamethylenreste, insbesondere Methylenreste.

Die linearen $C_2$-$C_{10}$-Etheralkyle sind entweder über die Sauerstoffatome oder über die darin enthaltenen Alkandiylreste mit der Ringstruktur verbunden. Vorzugsweise sind sie über die Sauerstoffatome hiermit verbunden. Die Indices 2 bis 10 bedeuten, daß 2 bis 10 C-Atome in den Etheralkylen enthalten sind.

Die Etheralkyle können nur 1 Sauerstoffatom enthalten. Es ist von Vorteil, wenn 2 bis 10, insbesondere 2 bis 5 Sauerstoffatome in der Kette vorhanden ist. Dann befinden sich 1 oder mehr, insbesondere aber 2, C-Atome zwischen 2 Sauerstoffatomen.

Beispiele geeigneter $C_2$-$C_{10}$-Etheralkyle sind

$-(O-CH_2)_m-$, worin m = 1 bis 10,
$-(O-C_2H_4)_p-$, worin p = 1 bis 5,
$-(O-C_3H_6)_q-$, worin q = 1 bis 3 oder
$-(O-C_4H_8)_r-$, worin r = 1 bis 2.

Wenn das Isocyanat Ia) zumindest eine Diisocyanat-Struktureinheit mit einer nicht aromatischen Ringstruktur (i), insbesondere Cyclohexan, enthält, können beide Isocyanatgruppen über $-CH_2-$, vorzugsweise an die Positionen 1 und 3 des Ringstrukturs gebunden sein. Es ist aber auch eine Bindung an die Positionen 1,2 und 1,4 möglich. Die Diisocyanat-Struktureinheit bzw. das Isocyanat Ia) hat dann beispielsweise die Formel $C_6H_{10}(-CH_2-NCO)_2$.

Es ist aber auch möglich, daß eine der beiden Isocyanatgruppen unmittelbar an ein Ringatom einer nicht aromatischen Ringstruktur (i), insbesondere Cyclohexan, gebunden ist und daß die zweite Isocyanatgruppe über $C_2$-$C_9$-Alkyl, insbesondere $C_3$- Alkyl an eine weiteres Ringatom, vorzugsweise in 1,2-Konfiguration, gebunden ist. Die Diisocyanat-Struktureinheit bzw. das Isocyanat Ia) hat dann beispielsweise die Formel $C_6H_{10}(-NCO)(-C_3H_6-NCO)$.

Wenn das Isocyanat Ia) zumindest eine Diisocyanat-Struktureinheit mit einer ungesättigten oder aromatischen Ringstruktur (i), insbesondere Benzol, enthält, können beide Isocyanatgruppen über $C_2$-$C_9$-Alkyl hiermit verbunden sein. Wichtig ist, daß die Alkandiylreste keine benzylischen Wasserstoffatome enthalten, sondern an deren Stelle Substituenten $R^1$ und $R^2$ tragen, welche weder mit Isocyanaten noch mit dem Amin oder dem Bindemittel reagieren. Beispiele geeigneter Substituenten R1 und R2 sind $C_1$-$C_{10}$-Alkyl, Aryl- oder Halogen, vorzugsweise $-CH_3$.

Beispiele geeigneter Alkandiylgruppen sind demnach $-CR^1R^2-(CH_2)_n-$, worin n = 1 bis 8, insbesondere 1 bis 4, und $R^1$ und $R^2$ = die vorstehend angegebenen Substituenten.

Die vorstehend beschriebenen Alkandiylgruppen sind vorzugsweise an die Positionen 1 und 3 des Benzolrings gebunden. Es ist indes auch in diesem Fall eine Bindung an die Positionen 1,2 und 1,4 möglich. Die Diisocyanat-Struktureinheit bzw. das erfindungsgemäß zu verwendende Isocyanat Ia) hat dann beispielsweise die Formel $C_6H_4(-C(CH_3)_2-C_2H_4-NCO)_2$.

Die beiden Isocyanatgruppen können indes auch über die vorstehend beschriebenen $C_2$-$C_{10}$-Etheralkyle mit dem ungesättigten oder aromatischen Ringstruktur, insbesondere Benzol, verbunden sein. Wichtig ist, daß die Etheralkyle keine benzylischen Wasserstoffatome tragen. Dies kann im Falle, daß die Etheralkyle über C-Atome mit dem aromatischen Ringstruktur verknüpft sind, dadurch erreicht werden, daß die benzylischen C-Atome die vorstehend beschriebenen Substituenten $R^1$ und $R^2$ tragen. Wenn die Etheralkyle über Sauerstoffatome mit dem aromatischen Ringstruktur verknüpft sind, sind keine benzylischen Wasserstoffatome vorhanden, weswegen diese Variante bevorzugt wird.

Es ist auch hier möglich, daß eine der beiden Isocyanatgruppen unmittelbar an ein Ringatom einer ungesättigten oder aromatischen Ringstruktur (i), vorzugsweise eines Benzolrings, gebunden ist und daß die zweite Isocyanatgruppe beispielsweise über $C_3$-$C_9$-Alkyl, welches keine benzylischen Wasserstoffatome aufweist, an eine weiteres Ringatom, vorzugsweise in 1,2-Konfiguration, gebunden ist. Die Diisocanat-Struktureinheit bzw. das erfindungsgemäß zu verwendende Isocyanat Ia) hat dann beispielweise die Formel $C_6H_4(-NCO)(-C(CH_3)_2-(CH_2)_2-NCO)$.

Anstelle des Isocyanats Ia) oder zusätzlich zu diesem kann mindestens ein Oligomer Ib) verwendet werden. Das Oligomer Ib) wird hergestellt aus dem Isocyanat Ia), wobei vorteilhafterweise 2 bis 10 Monomereinheiten umgesetzt werden und wobei die Trimerisierung besonders bevorzugt wird. Die Oligomerisierung und Trimersierung kann mit Hilfe üblicher und bekannter geeigneter Katalysatoren zur Bildung von Uretdion-, Biuret-, Isocyanurat-, Harnstoff und/ oder Allophanatgruppen führen. Eine Oligomerisierung ist aber auch möglich durch Umsetzung mit niedermolekularen Polyolen wie Trimethylolpropan oder Homotrimethylolpropan, Glycerin, Neopentylglykol, Dimethylolcyclohexan, Ethylenglykol, Diethylenglykol, Propylenglykol, 2-Methyl- 2-propylpropandiol-1,3, 2-Ethyl-2-butylpropandiol-1, 3,2,2,4-Trimethylpentandiol-1,5 und 2,2,5-Trimethylhexan- diol-1,6, die, sofern erforderlich, ggf. partiell ethoxyliert und/oder propoxyliert oder anderweitig hydrophiliert sind.

Anstelle des Isocyanats Ia) und/oder des Oligomeren Ib) oder zusätzlich zu diesen beiden können mindestens ein partiell blockiertes Isocyanat Ia) und/oder mindestens ein partiell blockiertes Oligomer Ib) (= Komponeten Ic)) verwendet werden.

Beispiele geeigneter Blockierungsmittel sind die aus der US-Patentschrift 4,444,954 bekannten Blockierungsmittel wie i) Phenole wie Phenol, Cresol, Xylenol, Nitrophenol, Chlorophenol, Ethylphenol, t-Butylphenol, Hydroxybenzoesäure, Ester dieser Säure oder 2,5-di-t-Butyl-4-hydroxy- toluol; ii) Lactame, wie - Caprolactam, -Valerolactam, -Butyrolactam oder -Propiolactam; iii) aktive methylenische Verbindungen, wie Diethylmalonat, Dimethylmalonat, Ethylacetoacetat, Methylacetoacetat oder Acetylaceton; iv) Alkohole wie Methanol, Ethanol, n-Propanol, Isopropanol, n-Butanol, Isobutanol, t-Butanol, n-Amylalkohol, t-Amylalkohol, Laurylalkohol, Ethylen- glykolmonomethylether, Ethylenglykolmonoethylether, Ethylenglylolmonopropylether, Ethylenglykolmonobutylether, Diethylenglykolmonomethyl- ether, Diethylenglykolmonoethylether, Propylenglykolmonomethylether, Methoxymethanol, Glykolsäure, Glykolsäureester, Milchsäure, Milchsäureester, Methylolhamstoff, Methylolmelamin, Diacetonalkohol, Ethylenchlorohydrin, Ethylenbromhydrin, 1,3-Dichloro-2-propanol oder Acetocyanhydrin; v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol; vi) Säureamide wie Acetoanilid, Acetoanisidinamid, Acrylamid, Methacrylamid, Essigsäureamid, Stearinsäureamid oder Benzamid; vii) Imide wie Succinimid, Phthalimid oder Maleimid; viii) Amine wie Diphenylamin, Phenylnaphthylamin, Xylidin, N-Phenylxylidin, Cabazol, Anilin, Naphthylamin, Butylamin, Dibutylamin oder Butylphenylamin; ix) Imidazole wie Imidazol oder 2-Ethylimidazol, x) Harnstoffe wie Harnstoff, Thiohamstoff, Ethylenhamstoff, Ethylenthioharnstoff oder 1,3-Diphenylharnstoff; xi) Carbamate wie N-Phenylcarbamidsäurephenylester oder 2-Oxazolidon; xii) Imine wie Ethylenimin, xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime; xiv) Salze der schwefeligen Säure wie Natriumbisulfit oder Kaliumbisulfit; xv) Hydroxamsäureester wie Benzylmethacrylohydroxamat (BMH) oder Allylmethacrylohydroxamat oder xvi) substituierte Pyrazole, Imidazole oder Triazole.

Die vorstehend beschriebenen Oligomere Ib) oder Ic) und Trimere Ib) oder Ic) haben vorteilhafterweise eine NCO-Funktionalität von 2,0 - 5,0, vorzugsweise von 2,2 - 4,0, insbesondere von 2,5 - 3,8. Die vorstehend im Detail beschriebenen Isocyanate Ia), deren Oligomere Ib) und/oder Trimere Ib) und/oder die Verbindungen Ic) können die einzigen Verbindungen zur Herstellung des Harnstoffderivats sein oder in Mischung mit den davor beschriebenen Isocyanaten verwendet werden.

Das hamstoffgruppenhaltige Thixotropierungsmittel kann separat hergestellt werden oder in Gegenwart des eingesetzten Bindemittels, insbesondere eines Polyacrylatharzes. In letzterem Fall wird üblicherweise so vorgegangen, daß die Aminkomponente zu einer Lösung des Acrylatharzes in einem organischen Lösemittel bzw. in einem Gemisch aus organischen Lösemitteln gegeben wird und dann das Polyisocyanat möglichst schnell und unter sehr starkem Rühren zugegeben wird. Die so erhaltene Mischung aus harnstoffgruppenhaltigem Thixotriopierungsmittel und Polyacrylatharz kann dann in den Beschichtungstoffen eingesetzt werden.

Desweiteren kann noch eine modifizierte, pyrogene, vorzugsweise hydrophobe, Kieselsäure als.Thixotropiermittel zugegen sein. Hydrophile und hydrophobe Kieselsäuren sind käuflich erwerblich, beispielsweise unter dem Handelsnamen Aerosil® und unter den Produktbezeichnungen 200, R972, R974, R805 und R812 von der Firma Degussa AG, Hanau.

Die erfindungsgemäß zu verwendende Mischung aus Thixotropiermittel und Netzmittel wird vorzugsweise in einer Menge von 0,1 bis 5 Gew.-%, bevorzugt 0,2 bis 2,5 Gew.-%, insbeondere 0,6 bis 2,0 Gew.-%, bezogen auf den Gesamtfeststoffgehalt des Beschichtungstoffs, eingesetzt.

Im Rahmen der Erfindung können die verschiedensten Bindemittel als Hauptbindemittel eingesetzt werden. Als Hauptbindemittel sind solche Bindemittel bezeichnet, die den mengenmäBig größten Anteil an ggf. verwendeten verschiedenen Bindemitteln haben. In Frage kommen beispielsweise ggf. hydroxylgruppenhaltige Polyacrylate. Im Falle von Bindemitteln für wäßrige Lacke enthalten die Bindemittel ionische oder nichtionische Gruppen, welche eine Wasserlöslichkeit oder Wasserdispergierbarkeit gewährleisten.

Erfindungsgemäß sind hydroxylgruppenhaltige Polyacrylate oder Polyacrylatharze von Vorteil und werden deshalb verwendet.

Im Falle der Polyacrylate für nichtwäßrige Beschichtungsstoff ist das Bindemittel ein Polyacrylatharz, welches herstellbar ist, indem (a) 16 bis 51 Gew.-%, vorzugsweise 16 bis 28 Gew.-%, eines hydroxylgruppenhaltigen Esters der Acrylsäure oder Methacrylsäure oder eines Gemiscches aus solchen Monomeren, (b) 32 bis 84 Gew.-%, vorzugsweise 32 bis 63 Gew.-%, eines von (a) verschiedenen aliphatischen oder cycloaliphatischen Esters der Acrylsäure oder Methacrylsäure mit vorzugsweise mindestens 4 C-Atomen im Alkoholrest oder eines Gemisches aus solchen Monomeren, (c) 0 bis 2 Gew.-%, vorzugsweise 0 bis 1 Gew.-%, einer ethylenisch ungesättigten Carbonsäure oder einer Mischung aus ethylenisch ungesättigten Carbonsäuren und (d) 0 bis 30 Gew.-%, vorzugsweise 0 bis 20 Gew.-%, eines von (a), (b) und (c) verschiedenen ethylenisch ungesättigten Monomers oder eines Gemisches aus solchen Monomeren zu einem Polyacrylatharz mit einer Säurezahl von 0 bis 15, vorzugsweise 0 bis 8, einer Hydroxylzahl von 80 bis 140, vorzugsweise 80 bis 120, und einem zahlenmittleren Molekulargewicht von 1.500 bis 10.000, vorzugsweise 2.000 bis 5.000 polymerisiert werden, wobei die Summe der Gewichtsanteile der Komponenten (a), (b), (c) und (d) stets 100 Gew.-% ergibt.

Die Herstellung der bevorzugt eingesetzten Polyacrylatharze kann nach allgemein gut bekannten Polymerisationsverfahren in Masse, Lösung oder Emulsion erfolgen. Polymerisationsverfahren zur Herstellung von Polyacrylatharzen sind allgemein bekannt und vielfach beschrieben (vgl. z.B.: Houben Weyl, Methoden der organischen Chemie, 4. Auflage, Band 14/1, Seite 24 bis 255 (1961)).

Weitere Beispiele geeigneter (Co)Polymerisationsverfahren für die Herstellung der Polyacrylatharze werden in den Patentschriften DE-A-197 09 465, DE-C-197 09 476, DE-A-28 48 906, DE-A-195 24 182, EP-A-0 554 783, WO 95/27742, DE-A-38 41 540 oder WO 82/02387 beschrieben.

Vorteilhaft sind Taylorreaktoren, insbesondere für die Copolymerisation in Masse, Lösung oder Emulsion.

Taylorreaktoren, die der Umwandlung von Stoffen unter den Bedingungen der Taylorströmung dienen, sind bekannt. Sie bestehen in wesentlichen aus zwei koaxialen konzentrisch angeordneten Zylindern, von denen der äußere feststehend ist und der innere rotiert. Als Reaktionsraum dient das Volumen, das durch den Spalt der Zylinder gebildet wird. Mit zunehmender Winkelgeschwindigkeit $\omega_i$ des Innenzylinders treten einer Reihe unterschiedlicher Strömungsformen auf, die durch eine dimensionslose Kennzahl, die sogenannte Taylor-Zahl Ta, charakterisiert sind. Die Taylor-Zahl ist zusätzlich zur Winkelgeschwindigkeit des Rührers auch noch abhängig von der kinematischen Viskosität $\nu$ des Fluids im Spalt und von den geometrischen Parametern, dem äußeren Radius des Innenzylinders $r_i$, dem inneren Radius des Außenzylinders $r_a$ und der Spaltbreite d, der Differenz beider Radien, gemäß der folgenden Formel:

$$Ta = \omega_i r_i d \nu^{-1} (d / r_i)^{1/2} \quad (I)$$

mit $d = r_a - r_i$.

Bei niedriger Winkelgeschwindigkeit bildet sich die laminare Couette-Strömung, eine einfache Scherströmung, aus. Wird die Rotationsgeschwindigkeit des Innenzylinders weiter erhöht, treten oberhalb eines kritischen Werts abwechselnd entgegengesetzt rotierende (kontrarotierende) Wirbel mit Achsen längs der Umfangsrichtung auf. Diese sogenannten Taylor-Wirbel sind rotationssymmetrisch und haben einen Durchmesser, der annähernd so groß ist wie die Spaltbreite. Zwei benachbarte Wirbel bilden ein Wirbelpaar oder eine Wirbelzelle.

Dieses Verhalten beruht darauf, daß bei der Rotation des Innenzylinders mit ruhendem Außenzylinder die Fluidpartikel nahe des Innenzylinders einer stärkeren Zentrifugalkraft ausgesetzt sind als diejenigen, die weiter vom inneren Zylinder entfernt sind. Dieser Unterschied der wirkenden Zentrifugalkräfte drängt die Fluidpartikel vom Innenzum Außenzylinder. Der Zentrifugalkraft wirkt die Viskositätskraft entgegen, da bei der Bewegung der Fluidpartikel die Reibung überwunden werden muß. Nimmt die Rotationsgeschwindigkeit zu, dann nimmt auch die Zentrifugalkraft zu. Die Taylor-Wirbel entstehen, wenn die Zentrifugalkraft größer als die stabilisierende Viskositätskraft wird.

Bei der Taylor-Strömung mit einem geringen axialen Strom wandert jedes Wirbelpaar durch den Spalt, wobei nur ein geringer Stoffaustausch zwischen benachbarten Wirbelpaaren auftritt. Die Vermischung innerhalb solcher Wirbelpaare ist sehr hoch, wogegen die axiale Vermischung über die Paargrenzen hinaus nur sehr gering ist. Ein Wirbelpaar kann daher als gut durchmischter Rührkessel betrachtet werden. Das Strömungssystem verhält sich somit wie ein ideales Strömungsrohr, indem die Wirbelpaare mit konstanter Verweilzeit wie ideale Rührkessel durch den Spalt wandern.

Erfindungsgemäß von Vorteil sind hierbei Taylorreaktoren mit einer äußeren Reaktorwand und einem hierin befindlichen konzentrisch oder exzentrisch angeordneten Rotor, einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durchflußrichtung verbreitert.

Die eingesetzten Polyacrylatharze werden vorzugsweise mit Hilfe des Lösungspolymerisationsverfahrens hergestellt. Hierbei wird üblicherweise ein organisches Lösemittel bzw. Lösemittelgemisch vorgelegt und zum Sieden erhitzt. In dieses organische Lösemittel bzw. Lösemittelgemisch werden dann das zu polymerisierende Monomerengemisch sowie ein oder mehrere Polymerisationsinitiatoren kontinuierlich zugegeben. Die Polymerisation erfolgt bei Temperaturen zwischen 100 und 160°C, vorzugsweise zwischen 130 und 150°C. Als Polymerisationsinitiatoren werden vorzugsweise freie Radikale bildende Initiatoren eingesetzt. Initiatorkraft und -menge werden üblicherweise so gewählt, daß bei der Polymerisationstemperatur während der Zulaufphase ein möglichst konstantes Radikalangebot vorliegt.

Als Beispiele für einsetzbare Initiatoren werden genannt: Dialkylperoxide, wie Di-tert.-Butylperoxid oder Dicumyl-peroxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethyl-hexanoat oder tert.-Butylper-2-ethylhexanoat; Azodinitrile wie-Azobisisobutyronitril oder C-C-spaltende Initiatoren wie Benzpinakolsilylether

Die Polymerisationsbedingungen (Reaktionstemperatur, Zulaufzeit der Monomerenmischung, Menge und Art der organischen Lösemittel und Polymerisationsinitiatoren, -eventuelle Mitverwendung von Molekulargewichtsreglern, wie z.B. Mercaptanen, Thiolglykolsäureestem und Chlorwasserstoffen) werden so ausgewählt, daß die eingesetzten Polyacrylatharze ein zahlenmittleres Molekulargewicht von 1.500 bis 10.000, vorzugsweise 2.000 bis 5.000 (bestimmt durch Gelpermeationschromatographie unter Verwendung von Polystyrol als Eichsubstanz) aufweisen.

Die Säurezahl der eingesetzten Polyacrylatharze kann vom Fachmann durch Einsatz entsprechender Mengen der Komponente (c) eingestellt werden. Analoges gilt für die Einstellung der Hydroxylzahl. Sie ist über die Menge an eingesetzter Komponente (a) steuerbar.

Als Komponente (a) kann im Prinzip jeder hydroxylgrup- penhaltige Ester der Acrylsäure oder Methacrylsäure oder ein Gemisch aus solchen Monomeren eingesetzt werden. Als Beispiele werden genannt: Hydroxyalkylester der Acrylsäure, wie z.B. Hydroxyethylacrylat, Hydroxypropylacrylat, Hydroxybutylacrylat, insbesondere 4-Hydroxy- butylacrylat; Hydroxyalkylester der Methacrylsäure, wie z.B. Hydroxyethylmethacrylat, Hydroxypropylmethacrylat, Hydroxybutylmethacrylat, insbesondere 4-Hydroxybutyl- methacrylat; Umsetzungsprodukte aus cyclischen Estern, wie z.B. E-Caprolacton und Hydroxyalkylestern der Acrylsäure bzw. Methacrylsäure.

Die Zusammensetzung der Komponente (a) wird vorzugsweise so ausgewählt, daß bei alleiniger Polymerisation der Komponente (a) ein Polyacrylatharz mit einer Glasüber- gangstemperatur von -50 bis +70, vorzugsweise -30 bis +50°C erhalten wird. Die Glasübergangstemperatur kann vom Fachmann unter Zuhilfenahme der Formel

$$1/T_G = \sum_{n=1}^{n=x} W_n/T_{Gn}$$

$T_G$ = Glasübergangstemperatur des Polymeren
x = Anzahl der verschiedenen einpolymerisierten Monomere,
$W_n$ = Gewichtsanteil des n-ten Monomers
$T_{Gn}$ = Glasübergangstemperatur des Homopolymers aus dem n-ten Monomer

näherungsweise berechnet werden.

Als Komponente (b) kann im Prinzip jeder von (a) verschiedene aliphatische oder cycloaliphatische Ester der Acrylsäure oder Methacrylsäure mit mindestens 4 C-Atomen im Alkoholrest oder ein Gemisch aus solchen Monomeren eingesetzt werden. Als Beispiele werden genannt: aliphatische Ester der Acryl- und Methacrylsäure mit 4 bis 20 C-Atomen im Alkoholrest, wie z.B. n-Butyl-, iso-Butyl-, tert.-Butyl, 2-Ethylhexyl-, Stearyl- und Laurylacrylat und -methacrylat sowie cycloaliphatische Ester der Acryl- und Methacrylsäure wie z. B. Cyclohexylacrylat und- Cyclohexylmethacrylat. Die Zusammensetzung der Komponente (b) wird vorzugsweise so ausgewählt, daß bei alleiniger Polymerisation der Komponente (b) ein Polyacrylatharz mit einer Glasübergangstemperatur von 10 bis 100, vorzugsweise 20 bis 60°C erhalten wird.

Als Komponente (c) kann im Prinzip jede ethylenisch ungesättigte Carbonsäure oder eine Mischung aus ethylenisch ungesättigten Carbonsäuren eingesetzt werden. Als Komponente (c) werden vorzugsweise Acrylsäure und/oder Methacrylsäure eingesetzt.

Als Komponente (d) kann im Prinzip jedes von (a), (b) und (c) verschiedene ethylenisch ungesättigte Monomer oder ein Gemisch aus solchen Monomeren eingesetzt werden. Als Beispiele für Monomere, die als Komponente (d) eingesetzt werden können, werden genannt: vinylaromatische Kohlenwasserstoffe, wie Styrol, alpha-Alkylstyrol und Vinyltoluol, Amide der Acrylsäure und Methacrylsäure, wie z.B. Methacrylamid und Acrylamid, Nitrile der Methacrylsäure und Acrylsäure; Vinylether und Vinylester oder Polysiloxanmakromonomere, wie sie in den Patentschriften DE-A-38 07 571, DE-A 37 06 095, EP-B-0 358 153, US-A 4,754,014, DE-A 44 21 823 oder WO 92/22615 beschrieben werden. Als Komponente (d) werden vorzugsweise vinylaromatische Kohlenwasserstoffe, insbesondere Styrol eingesetzt. Die Zusammensetzung der Komponente (d) wird vorzugsweise so ausgewählt, daß bei alleiniger Polymerisation der Komponente (d) ein Harz mit einer Glasübergangstemperatur von 70 bis 120, vorzugsweise 80 bis 100°C erhalten wird.

Vorteilhafterweise sind die Bindemittel in dem Beschichtungsstoff in einer Menge von 10 bis 90 Gew.-%, besonders bevorzugt 15 bis 80 Gew.-% und insbesondere 20 bis 70 Gew.-%, jeweils bezogen auf den Gesamtfeststoffgehalt des Beschichtungsstoffs, enthalten.

Der Beschichtungsstoff enthält des weiteren mindestens ein Vernetzungsmittel.

Handelt sich bei dem Beschichtungsstoff um ein Mehrkomponentensystem, werden Polyisocyanate und/oder Polyepoxide, insbesondere aber Polyisocyanate als Vernetzungsmittel verwendet.

Beispiele geeigneter Polyisocyanate sind die vorstehend bei der Herstellung der Thixotropiermittel beschriebenen Polyisocyanate.

Weitere Beispiele geeigneter Polyisocyanate sind organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100

bis 10.000, vorzugsweise 100 bis 5000 und insbesondere 100 bis 2000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel die Polyisocyanate sind beispielsweise Ethoxyethylpropionat, Amylmethylketon oder Butylacetat.

Außerdem können die Polyisocyanate in üblicher und bekannter Weise hydrophil oder hydrophob modifiziert sein.

Beispielsweise geeignet sind auch die isocyanatgruppenhaltigen Polyurethanpräpolymere, die durch Reaktion von Polyolen mit einem Überschuß an Polyisocyanaten hergestellt werden können und die bevorzugt niederviskos sind.

Weitere Beispiele geeigneter Polyisocyanate sind Isocyanurat-, Biuret-, Allophanat-, Iminooxadiazindon-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat oder Dicyclohexylmethan-4,4'-diisocyanat, Diisocyanate, abgeleitet von Dimerfettsäuren, wie sie unter der Handelsbezeichnung DDI 1410 von der Firma Henkel vertrieben werden, 1,8-Düsocyanato-4-isocyanatomethyl-oktan, 1,7-Düsocyanato-4-isocyanatomethyl-heptan oder 1-Isocyanato-2-(3-isocyanatopropyl)cyclohexan oder Mischungen aus diesen Polyisocyanaten eingesetzt.

Weitere Beispiele für geeignete Isocyanate sind in "Methoden der organischen Chemie", Houben-Weyl, Band 14/2, 4. Auflage, Georg Thieme Verlag, Stuttgart 1963, Seite 61 bis 70, W. Siefken, Liebigs Ann. Chem. 562, 75 bis 136, der europäischen Patentschrift EP-A-101 832 oder den US-Patentschriften US-PS-3,290,350, UP-PS-4,130,577 und US-PS-4,439,616 beschrieben.

Beispiele für geeignete Polyepoxide sind alle bekannten aliphatischen und/oder cycloaliphatischen und/oder aromatischen Polyepoxide, beispielsweise auf Basis Bisphenol-A oder Bisphenol-F. Als Polyepoxide geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether).

Im Falle der Einkomponentensysteme werden Vernetzungsmittel verwendet, welche es bei höheren Temperaturen mit den funktionellen Gruppen der Bindemittel reagieren, um ein dreidimensionales Netzwerk aufzubauen. Selbstverständlich können solche Vernetzungsmittel in untergeordneten Mengen in den Mehrkomponentensystemen mit verwendet werden. Im Rahmen der vorliegende Erfindung bedeutet "untergeordnete Menge" einen Anteil, welcher die hauptsächliche Vernetzungsreaktion nicht stört oder gar ganz verhindert.

Beispiele geeigneter Vernetzungsmittel dieser Art sind blockierte Polyisocyanate. Beispiele geeigneter Polyisocyanate sind die vorstehend beschriebenen.

Beispiele für geeignete Blockierungsmittel sind die aus der US-Patentschrift US-A-4,444,954 bekannten Blokkierungsmittel.

Als Vernetzungsmittel können auch Tris(alkoxycarbonylamino)triazine der allgemeinen Formel

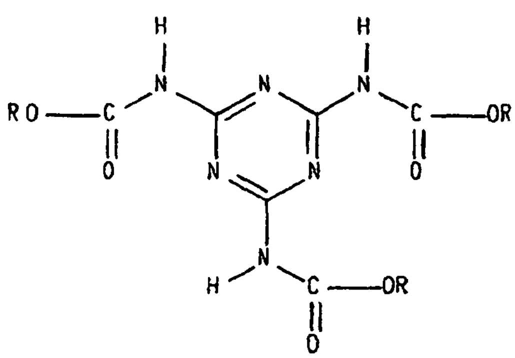

eingesetzt werden.

Beispiele geeigneter Tris(alkoxycarbonylamino)triazine werden in den Patentschriften US-A-4,939,213, US-A-5,084,541 oder der EP-A-0 624 577 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Insbesondere sind Aminoplastharze, beispielsweise Melaminharze, als Vernetzungsmittel verwendbar. Hierbei kann jedes für transparente Decklacke oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defimktionalisiert sind. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers forthe Coatings Industry" in Advanced Organic Coatings Science and Technology Series, 1991, Band 13, Seiten 193 bis 207, beschrieben.

Weitere Beispiele geeigneter Vernetzungsmittel sind beta-Hydroxyalkylamide wie N,N,N',N'-Tetrakis(2-hydroxyethyl)adipamid oder N,N,N',N'-Tetrakis(2-hydroxypropyl)-adipamid.

Weitere Beispiele geeigneter Vernetzungsmittel sind Siloxane, insbesondere Siloxane mit mindestens einer Trialkoxy- oder Dialkoxysilangruppe.

Weitere Beispiele geeigneter Vernetzungsmittel sind Polyanhydride, insbsondere Polysuccinsäureanhydrid.

Die Menge der Vernetzungsmittel in dem Beschichtungsstoff kann breit variieren und richtet sich insbesondere zum einen nach der Funktionalität der Vernetzungsmittel und zum anderen nach der Anzahl der im Bindemittel vorhandenen vernetzenden funktionellen Gruppen sowie nach der Vernetzungsdichte, die man erzielen will. Der Fachmann kann daher die Menge der Vernetzungsmittel aufgrund seines allgemeinen Fachwissens, gegebenenfalls unter Zuhilfenahme einfacher orientierender Versuche ermitteln. Vorteilhafterweise ist das Vernetzungsmittel in dem Beschichtungsstoff in einer Menge von fünf bis 60 Gew.-%, besonders bevorzugt 10 bis 50 Gew.-% und insbesondere 15 bis 45 Gew.-%, jeweils bezogen auf den Gesamtfeststoffgehalt des Beschichtungsstoffs, enthalten. Hierbei empfiehlt es sich des weiteren, die Mengen an Vernetzungsmittel und Bindemittel so zu wählen, daß in dem Beschichtungsstoff das Verhältnis von funktionellen Gruppen im Vernetzungsmittel und funktionellen Gruppen im Bindemittel zwischen 2 : 1 bis 1 : 2, vorzugsweise 1,5 : 1 bis 1 : 1,5, besonders bevorzugt 1,2 : 1 bis 1 : 1,2 und insbesondere 1,1 : 1 bis 1 : 1,1 liegt.

Bevorzugt ist es, daß der Beschichtungsstoff ein nichtwäßriger Beschichtungsstoff, vorzugsweise ein nichtwäßriger, transparenter Glanzklarlack, ist. Der Ausdruck Glanzklarlack meint, daß ein möglichst hoher Glanz angestrebt ist, im Gegensatz zu den Mattlacken.

Im Falle von nichtwäßrigen Beschichtungsstoffen enthalten diese 20 bis 70 Gew.-%, vorzugsweise 40 bis 60 Gew.-%, (bezogen auf das applikationsfertige Beschichtungsstoff) organische Lösungsmittel, wie z.B. aliphatische, aromatische und/oder cycloaliphatische Kohlenwasserstoffe, Alkylester der Essigsäure oder Propionsäure, Alkanole, Ketone, Glykolether und/oder Glykoletherester.

Darüber hinaus kann der Beschichtungsstoff mindestens ein übliches und bekanntes Lackadditiv in wirksamen Mengen, d.h. in Mengen vorzugsweise bis -zu 40 Gew.-%, besonders bevorzugt bis zu 30 Gew.-% und insbesondere bis zu 20 Gew.-%, jeweils bezogen auf den Gesamtfeststoffgehalt des Beschichtungsstoffs, enthalten. Wesentlich ist, daß die Lackadditive die Transparenz und Klarheit des Beschichtungsstoffs nicht negativ beeinflussen.

Beispiele geeigneter Lackadditive sind

- UV-Absorber;
- Lichtschutzmittel wie HALS-Verbindungen, Benztriazole oder Oxalanilide;
- Radikalfänger;
- Katalysatoren für die Vernetzung wie Dibutylzinndilaurat oder Lithiumdecanoat;
- Slipadditive;
- Polymerisationsinhibitoren;
- Entschäumer;
- Emulgatoren, insbesondere nicht ionische Emulgatoren wie alkoxylierte Alkanole, Polyole, Phenole und Alkylphenole oder anionische Emulgatoren wie Alkalisalze oder Ammoniumsalze von Alkancarbonsäuren, Alkansulfonsäuren und Sulfosäuren von alkoxylierten Alkanolen, Polyolen, Phenolen und Alkylphenolen;

- zusätzliche Netzmittel wie Siloxane, fluorhaltige Verbindungen, Carbonsäurehalbester, Phosphorsäureester, Polyacrylsäuren und deren Copolymere oder Polyurethane;

- Haftvermittler wie Tricyclodecandimethanol;

- Verlaufmittel;

- filmbildende Hilfsmittel wie Cellulose-Derivate;

- transparente Füllstoffe wie Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;

- Rheologiesteuernder Additive wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid-oder Ethylen-Maleinsäureanhydrid-Copolymere und ihre Derivate oder hydrophob modifizierte ethoxylierte Urethane oder Polyacrylate;

- Flammschutzmittel und/oder

- Mattierungsmittel.

Weitere Beispiele geeigneter Lackadditive (a6) werden in dem Lehrbuch »Lackadditive« von Johan Bieleman, Wiley-VCH, Weinheim, New York, 1998, beschrieben.

Die Erfindung betrifft weiterhin ein Verfahren zur Herstellung eines erfindungsgemäßen Beschichtungsstoffs, wobei:

A) ein Bindemittel hergestellt wird,

B) die Herstellung des erfindungsgemäß zu verwendenden Harnstoffderivats in Gegenwart zumindest einer Teilmenge des Bindemittels aus Stufe A) durchgeführt wird und

C) die Mischung aus Bindemittel und Harnstoffderivat

- vor, während oder nach der Stufe B) mit dem erfindungsgemäß zu verwendenden Netzmittel,

- gegebenenfalls mit einer Anreibung (Paste) einer Kieselsäure mit einer ersten Teilmenge eines optional vom Bindemittel aus Stufe A) verschiedenen Bindemittels, vorzugsweise eines Polyacrylatharzes der vorstehend beschriebenen Art,

- mit einem Vernetzungsmittel oder einer Mischung aus Vernetzungsmitteln und, optional,

- mit mindestens einem der vorstehend beschriebenen Lackadditive,

- mit mit Polyacrylaten verträglichen, von den vorstehend angegebenen Bindemitteln verschiedenen Bindemitteln und

- gegebenenfalls mit der Restmenge der mit dem Bindemittel angeriebenen Kieselsäure

gemischt und auf eine zur Verarbeitung üblichen Viskosität eingestellt wird.

Hierbei kann das Vernetzungsmittel oder die Mischung von Vernetzungsmitteln gleichzeitig oder erst unmittelbar vor einer Applikation des Beschichtungsstoffs zugegeben werden. Im Falle von Zweikomponentensystemen wird das Vernetzungsmittel, beispielsweise unblockierte Polyisocyanate, erst unmittelbar vor der Applikation des Beschichtungsstoffs zugegeben, Im Falle von Einkomponentensystemen kann das Vernetzungsmittel, beispielsweise blockierte Polyisocyanate, bereits herstellerseitig zugegeben sein.

Die Erfindung betrifft weiterhin die Verwendung eines erfindungsgemäßen Beschichtungsstoffs zur Herstellung eines Glanzklarlackierung über einer farbund/oder effektgebenden Basislackierung, insbesondere einer Basislackierung, welche unter Verwendung eines Wasserbasislacks hergestellt worden ist. Farbgebung wird mittels Farbstoffen und oder Farbpigmenten erreicht. Effektgebung wird mit Effektpigmenten wie Metalleffektpigmenten oder Micapigmenten erreicht.

Beispiele geeigneter Wasserbasislacke sowie die entsprechenden Lackierungen sind aus den Patentschriften EP-A-0 089 497, EP-A-0 256 540, EP-A-0 260 447, EP-A-0 297 576, WO 96/12747, EP-A-0 523 610, EP-A-0 228 003, EP-A-0 397 806, EP-A-0 574 417, EP-A-0 531 510, EP-A-0 581 211, EP-A-0 708 788, EP-A-0 593 454, DE-A-43 28 092, EP-A-0 299 148, EP-A-0 394 737, EP-A-0 590 484, EP-A-0 234 362, EP-A-0 234 361, EP-A-0 543 817, WO 95/14721, EP-A-0 521 928, EP-A-0 522 420, EP-A-0 522 419, EP-A-0 649 865, EP-A-0 536 712, EP-A-0 596 460, EP-A-0 596 461, EP-A-0 584 818, EP-A- 0 669 356, EP-A-0 634 431, EP-A-0 678 536, EP-A-0 354 261, EP-A-0 424 705, WO 97/49745, WO 97/49747, EP-A-0 401 565, EP-B-0 730 613 oder WO 95/14721 bekannt.

Die Erfindung betrifft schließlich ein Verfahren zur Herstellung einer farbund/oder effektgebenden Mehrschichtlackierung auf einer Oberfläche von grundierten oder ungrundierten Substraten, bei dem (1) ein mit farb- und/ oder effektgebenden Pigmenten versehener Basislack, insbesondere Wasserbasislack, auf die Substratoberfläche aufgebracht wird, (2) die in Stufe (1) aufgebrachte Basislackschicht bei Temperaturen zwischen 15°C und 100°C, vorzugsweise zwischen 20°C und 85°C, getrocknet wird, (3) auf die in Stufe (2) getrockneten Basislackschicht ein transparenter erfindungsgemäßer Beschichtungsstoff als Klarlackschicht aufgebracht wird und anschließend (4) Basislackschicht und Decklackschicht zusammen eingebrannt werden und zwar vorzugsweise bei Temperaturen zwischen 120°C und 180°C und in einer Zeitspanne von 5 min bis 60 min.

Als Substrate kommen alle zu lackierenden Oberflächen von Gegenständen in Betracht, die einer Härtung der hierauf befindlichen Lackschichten unter Anwendung von Hitze zugänglich sind, das sind z. B. Gegenstände aus Metallen, Kunststoffen, Holz, Keramik, Stein, Textil, Faserverbunden, Leder, Glas, Glasfasern, Glas- und Steinwolle oder mineral- und harzgebundene Baustoffen, wie Gips- und Zementplatten oder Dachziegel. Demnach ist der Beschichtungsstoff, insbesondere als Klarlack, für Anwendungen in der Automobillackierung der Lackierung von Möbeln und der industrielle Lackierung, inklusive Coil Coating und Container Coating, in hohem Maße geeignet. Im Rahmen der industriellen Lackierungen eignet er sich für die Lackierung praktisch aller Teile für den privaten oder industriellen Gebrauch wie Radiatoren, Haushaltsgeräte, Kleinteile aus Metall, Radkappen oder Felgen.

Mit dem Beschichtungsstoff, insbesondere dem Klarlack, können insbesondere auch grundierte oder nicht grundierte sowie gegebenenfalls mit einer Basislackschicht beschichte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es kann auch für die Beschichtung von üblicherweise im Fahrzeugbau, insbesondere Kraftfahrzeugbau, eingesetzten Kunststoffe zum Einsatz kommen. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen werden.

Bei den mit Hilfe des Beschichtungsstoffs, insbesondere des Klarlacks, hergestellten Mehrschichtlackierungen ist keine Delamination wegen mangelhafter Zwischenschichthaftung zu beobachten. Ihr Verlauf und ihre optischen Eigenschaften sind hervorragend. Auch neigen sie nicht mehr zum Weißanlaufen nach Schwitzwasserbelastung.

**Herstellbeispiele**

**1. Die Herstellung eines erfindungsgemäß verwendbaren Polyacrylats** (A)

In einem Laborreaktor mit einem Nutzvolumen von 4 l ausgestattet mit einem Rührer, zwei Tropftrichtern für die Monomermischung resp. Initiatorlösung, Stickstoffeinleitungsrohr, Thermometer und Rückflußkühler wurden 897 g einer Fraktion aromatischer Kohlenwasserstoffe mit einem Siedebereich von 158 - 172°C eingewogen. Das Lösemittel wurde auf 140 °C aufgeheizt. Nach Erreichen von 140 °C wurden eine Monomermischung aus 487 g t-Butylacrylat, 215 g n-Butylmethacrylat, 143 g Styrol, 572 g Hydroxipropylmethacrylat und 14 g Acrylsäure innerhalb von 4 Stunden, und eine Initiatorlösung von 86g t-Butylperethylhexanoat in 86 g des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden auf 140 °C gehalten und danach abgekühlt. Die resultierende mit einer Mischung aus 1-Methoxipropylacetat-2, Butylglykolacetat und Butylacetat verdünnte Polymerlösung hatte einen Feststoffgehalt von 53%, bestimmt in einem Umluftofen 1 h bei 130 °C, eine Säurezahl von 10 mg KOH/g und eine Viskosität von 23 dPas (gemessen an einer 60%igen Anlösung der Polymerlösung in dem beschriebenen aromatischen Lösemittel, unter Verwendung eines ICI Platte-Kegel Viskosimeters bei 23 °C).

**2. Die Herstellung eines erfindungsgemäß verwendbaren Polyacrylats (B)**

In einem Laborreaktor mit einem Nutzvolumen von 4 l ausgestattet mit einem Rührer, zwei Tropftrichtern für die Monomermischung resp. Initiatorlösung, Stickstoffeinleitungsrohr, Thermometer und Rückflußkühler wurden 720 g einer Fraktion aromatischer Kohlenwasserstoffe mit einem Siedebereich von 158 - 172 °C eingewogen. Das Lösemittel wurde auf 140 °C aufgeheizt. Nach Erreichen von 140 °C wurden eine Monomermischung aus 397,5 g n-Butylacrylat, 180 g n-Butylmethacrylat, 450 g Styrol, 270 g Hydroxypropylmethacrylat, 165 g Hydroxybutylacrylat und 37,5 g Acrylsäure innerhalb von 4 Stunden, und eine Initiatorlösung von 105 g t-Butylperethylhexanoat in 90 g des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden auf 140 °C gehalten und danach abgekühlt Die resultierende Polymerlösung hatte einen Feststoffgehalt von 60%, bestimmt in einem Umluftofen 1 h bei 130 °C, eine Säurezahl von 17 mg KOH/g, eine OHZ von 113 mg KOH/g und eine Viskosität von 16 dPas (gemessen an einer 60%igen Anlösung der Polymerlösung in dem beschriebenen aromatischen Lösemittel, unter Verwendung eines ICI Platte-Kegel Viskosimeters bei 23 °C). die Glasübergangstemperatur des Polyacrylatharzes lag bei 9,78 °C.

**3. Die Herstellung eines erfindungsgemäß verwendbaren Polyacrylats (C)**

In einem Laborreaktor mit einem Nutzvolumen von 4 l ausgestattet mit einem Rührer, zwei Tropftrichtern für die Monomermischung resp. Initiatorlösung, Stickstoffeinleitungsrohr, Thermometer-und Rückflußkühler wurden 720 g einer Fraktion aromatischer Kohlenwasserstoffe mit einem Siedebereich von 158 - 172 °C eingewogen. Das Lösemittel wurde auf 140 °C aufgeheizt. Nach Erreichen von 140 °C wurden eine Monomermischung aus 934,5 g n-Butylmethacrylat, 150 g Styrol, 384 g 4-Hydroxybutylacrylat und 31,5 g Acrylsäure innerhalb von 4 Stunden, und eine initiatorlösung von 90 g t-Butylperethylhexanoat in 90 g des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden auf 140 °C gehalten und danach abgekühlt. Die resultierende Polymerlösung hatte einen Feststoffgehalt von 60%, bestimmt in einem Umluftofen 1 h bei 130 °C, eine Säurezahl von 17 mg KOH/g, eine OHZ von 99 mg KOH/g und eine Viskosität von 3 dPas (gemessen an einer 60%igen Anlösung der Polymerlösung in dem beschriebenen aromatischen Lösemittel, unter Verwendung eines ICI Platte-Kegel Viskosimeters bei 23 °C). Die Glastemperatur des Polyacrylatharzes lag bei -1,45 °C.

**4. Die Herstellung eines erfindungsgemäß verwendbaren blockierten Polyisocyanats** (A)

In einem 4l- Edelstahlreaktor wurden 40 Gewichtsteile Basonat® HI 190 B/S (Isocyanurat auf der Basis von Hexamethylendiisocyanat der Firma BASF Aktiengesellschaft) und 16,4 Gewichtsteile Solventnaphtha eingewogen und auf 50°C erhitzt. Innerhalb von vier Stunden wurden 26,27 Gewichtsteile Diethylmalonat, 6,5 Gewichtsteile Acetessigsäureethylester und 0,3 Gewichtsteile Katalysatorlösung (Natriumethylhexanoat) gleichmäßig zudosiert. Im Anschluß daran wurde die Temperatur auf 70°C erhöht. Bei Erreichen eines Isocyanat-Äquivalentgewichts von 5.900 bis 6.800 wurden 1,03 Gewichtsteile 1,4-Cyclohexyldimethanol während 30 Minuten bei 70°C unter Rühren zugegeben. Nach Erreichen eines Isocyanat-Äquivalentgewichts von ≥ 13.000 wurden 5 Gewichtsteile n-Butanol zugegeben. Die Temperatur wurde dabei auf 50°C gesenkt, und das resultierende blockierte Polyisocyanat mit n-Butanol auf einen theoretischen Festkörpergehalt von 68 Gew.-% angelöst.

**5. Die Herstellung eines erfindungsgemäß verwendbaren blockierten Polyisocyanats (B)**

In einem 4l - Edelstahlreaktor wurden 41,76 Gewichtsteile Vestanat® 1890 (Isocyanurat auf der Basis von Isophorondiisocyanat der Firma Creanova) und 20,76 Gewichtsteile Solventnaphtha eingewogen und auf 50°C erhitzt. Innerhalb von vier Stunden wurden 23,49 Gewichtsteile Diethylmalonat, 5,81 Gewichtsteile Acetessigsäureethylester und 0,14 Gewichtsteile Katalysatorlösung (Natriumethylhexanoat) gleichmäßig zudosiert. Nach Beendigung des Zulaufs wurden nochmals 0,14 Gewichtsteile Katalysatorlösung hinzugegeben. Im Anschluß daran wurde die Temperatur auf 80°C erhöht. Bei Erreichen eines Isocyanat-Äquivalentgewichts von 5900 bis 6800wurden 0,9 Gewichtsteile 1,4-Cyclohexyldimethanol während 30 Minuten bei 80°C unter Rühren zugegeben. Nach Erreichen eines Isocyanat-Äquivalentgewichts von > 13.000 wurden 5 Gewichtsteile n-Butanol zugegeben. Die Temperatur wurde dabei auf 50°C gesenkt, und das resultierende blockierte Polyisocyanat mit n-Butanol auf einen theoretischen Festkörpergehalt von 63 Gew.-% angelöst.

**6. Die Herstellung einer erfindungsgemäß verwendbaren Thixotropierpaste** (A)

In einer Laborrührwerksmühle der Firma Vollrath wurden 800 g Mahlgut, bestehend aus 592 g des Polyacrylats A, 80 g Butylacetat, 64 g Xylol und 64 g Aerosil® 972 (Degussa AG, Hanau), zusammen mit 1100 g Quarzsand (Korngröße 0.7 - 1 mm) eingewogen und unter Wasserkühlung 30 Minuten angerieben.

**7. Die Herstellung eines erfindungsgemäßen 2K-Klarlacks (Beispiel 1) und nicht erfindungsgemäßen 2K-Klarlacks (Vergleichsversuch 1)**

Ein erfindungsgemäßer 2K-Klarlack (Beispiel 1) und ein herkömmlicher 2K-Klarlack (Vergleichsversuch 1) wurden aus den in der Tabelle 1 aufgeführten Bestandteilen durch Vermischen hergestellt und auf Prüftafeln appliziert. Als Prüftafeln wurden Stahltafeln aus Karosseriestahl verwendet, welche mit handelsüblicher Zinkphosphatlösung vorbehandelt und wie nachstehend beschrieben mit einem Elektrotauchlack und einem Füller beschichtet worden waren.

Tabelle 1:

| **Zusammensetzung des erfindungsgemäßen 2K-Klarlacks (Beispiel 1) u. des herkömmlichen 2K- Klarlacks (Vergleichsversuch 1)** | | |
|---|---|---|
| **Bestandteile Stammlack** | **Beispiel 1 (Gew.-Teile)** | **Vergleichsvers.1 (Gew.-Teile)** |
| Bindemittel | | |
| Polyacrylat A | 61.9 | 61,9 |
| Setalux® C91756 (Akzo Nobel Resins, Bergen op Zoom) | 13.5 | 13.5 |
| Thixotropierpaste A | 5.0 | 5.0 |
| Weitere Bestandteile | | |
| Substituiertes Hydroxyphenyltriazin (65 %ig in Xylol) | 1.5 | 1.5 |
| N-Methyl-2,2,6,6-tetra-Methylpiperydinylester | 1.0 | 1.0 |
| Dibasic Ester | 2.0 | 2.0 |
| Disperbyk® 161 (Byk Chemie) | 1.0 | ---- |
| Byk® 310 (Byk Chemie) | 0.15 | 0.15 |
| Byk® ES-80 (Byk Chemie) | 0.15 | 0.15 |
| Byk® 390 (Byk Chemie) | 0,05 | 0.05 |
| Butanol | 1.65 | 1.65 |
| Xylol | 1.5 | 1.5 |
| Butylglykolacetat | 5.6 | 6.6 |
| Glykolsäurebutylester | 5.0 | 5.0 |
| | 100 | 100 |
| Vernetzer | 33 | 33 |

Der Vernetzer ist eine Anlösung eines Polyisocyanats auf der Basis Hexamethylendiisocyanat (80%-ige Anlsg. von Desmodur® N 3390 von Bayer AG in Butylacetat/Solventnaphtha).

Setalux® C91756 der Firma Akzo ist ein Harnstoffderivat, in einem Bindemittel dispergiert.

Dibasic Ester der Firma DuPont ist ein Gemisch von Bernsteinsäure-, Glutarsäureund Adipinsäure-Dimethylester.

**8. Lacktechnische Prüfungen**

Zur Herstellung der Prüftafeln wurden nacheinander ein Elektrotauchlack mit einer Schichtdicke von 18 - 22 µm und ein Wasserfüller mit einer Schichtdicke von 35 - 40 µm appliziert und eingebrannt. Hierbei wurde der Elektrotauchlack während 20 Minuten bei 170°C und der Füller während 20 Minuten bei 160°C eingebrannt. Anschließend

wurde ein blauer Wasserbasislack mit einer Schichtdicke von 12 - 15 µm aufgetragen und 10 Minuten bei 80°C abgelüftet. Abschließend wurde das zu prüfende 2K-System des Beispiels 1 und des Vergleichsversuches 1 mit einer Schichtdicke von 40 - 45µm in einem Einmalauftrag elektrostatisch vertikal appliziert (Glockentyp: Ecobell), wonach der Basislack und das 2K-System während 20 Minuten bei 140°C vertikal gehärtet wurden (naß-in-naß-Verfahren).

Tabelle 2:

| **Verlaufseigenschaften (vertikal) des erfindungsgemäßen 2K- Klarlacks des Beispiels 1 und des herkömmlichen 2K-Klarlacks des Vergleichsversuchs 1** | | |
|---|---|---|
| | **Beispiel 1** | **Vergleichsvers. 1** |
| Benetzungsgrenze (ESTA-Applikation) | 15 µm | 17 µm |
| Verlauf (visuell) | glatte Oberfl. (ausgeprägte Narbe) | welligere Oberfl. (flache Narbe) |
| Verlauf (meßtechn.) Wavescan/longwave (40µm)[a] | 5.0 | 9.0 |

a) Meßgerät: Fa. Byk/Gardner - Wave scan plus

**9. Die Herstellung eines erfindungsgemäßen1 K-Klarlacks (Beispiel 2) und eines nicht erfindungsgemäßen 1 K-Klarlacks (Vergleichsversuch 2)**

Ein erfindungsgemäßer 1 K-Klarlack (Beispiel 2) und ein herkömmlicher 1 K-Klarlack (Vergleichsversuch 2) wurden aus den in der Tabelle 3 aufgeführten Bestandteilen durch Vermischen hergestellt und auf Prüftafeln (vgl. Herstellbeispiel 8) appliziert.

Tabelle 3:

| **Zusammensetzung des erfindungsgemäßen 1 K-Klarlacks (Beispiel 2) und des herkömmlichen 1 K-Klarlacks (Vergleichsversuch 2)** | | |
|---|---|---|
| **Bestandteile** | **Beispiel 2 (Gew. -Teile)** | **Vergleichsvers. 2 (Gew. -Teile)** |
| Bindemittel | | |
| Polyacrylat B | 16.8 | 16.8 |
| Polyacrylat C | 16.8 | 16.8 |
| Setalux® C91756 (Akzo Nobel Resins, Bergen op Zoom) | 19.0 | 19.0 |
| Netzmittel | | |
| Disperbyk® 161 (Byk Chemie) | 1.0 | ---- |
| Vernetzungsmittel | | |
| Blockiertes Polyisocyanat A | 10.6 | 10.6 |
| Blockiertes Polyisocyanat B | 3.5 | 3.5 |
| Handelsübliches Butanolverethertes Melamin-Formaldehyd-Harz (60%-ig in Butanol/ Xylol) | 19.2 | 19.2 |
| Weitere Bestandteile | | |
| Substit. Hydroxyphenylbenztriazol (95%-ig in Xylol) | 1.3 | 1.3 |
| Aminoethermodifizierter -2,2,6,6-Tetramethyl-piperydinylester | 0.7 | 0.7 |
| Baysilon® OL 44 | 0.075 | 0.075 |

Tabelle 3: (fortgesetzt)

| Zusammensetzung des erfindungsgemäßen 1 K-Klarlacks (Beispiel 2) und des herkömmlichen 1 K-Klarlacks (Vergleichsversuch 2) | | |
|---|---|---|
| **Bestandteile** | **Beispiel 2 (Gew. -Teile)** | **Vergleichsvers. 2 (Gew. -Teile)** |
| Weitere Bestandteile | | |
| Byk® 320 (Byk Chemie) | 0.01 | 0.01 |
| Nacure® 2500 (5%-ig in Xylol) | 0.15 | 0.15 |
| Butanol | 6.79 | 6.79 |
| Benzin 180/210 | 2.0 | 2.0 |
| Solvesso® 150 | 0.65 | 1.65 |
| Xylol | 1.425 | 1.425 |
| | | 100 100 |

Nacure® 2500Ist ein Vernetzungskatalysator auf der Basis einer mit Amin blockierten aromatischen Sulfonsäure.

Baysilon® OL 44 ist ein handelsübliches Verlaufhilfsmittel der Firma Bayer AG auf der Basis von Polydimethylsiloxanen

**11. Lacktechnische Prüfungen**

Bei der Lagerung der 1 K-Klarlacke des Beispiels 2 und des Vergleichsversuchs 2 während 16 Stunden bei 60 °C stieg bei dem Klarlack des Beispiels 2 die Auslaufzeit aus dem DIN 4-Auslaufbecher nur um 23 Sekunden an, wogegen die Auslaufzeit des Klarlacks gemäß dem Vergleichsversuch 2 um 78 Sekunden anstieg.

Ebenso wies der Klarlack des Beispiels 2 einen deutlich besseren Verlauf und eine signifikant niedrigere Benetzungsgrenze auf als derjenige des Vergleichsversuchs 2.

## Patentansprüche

**1.** Beschichtungstoff, enthaltend ein Bindemittel und ein Vernetzungsmittel sowie ein Thixotropierungsmittel auf der Basis von Harnstoffen und/oder Harnstoffderivaten, **dadurch gekennzeichnet, daß** der Beschichtungstoff zusätzlich ein die Benetzbarkeit des Thixotropierungsmittels verbesserndes Netzmittel enthält und daß das Bindemittel ein Polyacrylatharz ist, welches herstellbar ist, indem

(a) 16 bis 51 Gew.-%, vorzugsweise 16 bis 28 Gew.-%, eines hydroxylgruppenhaltigen Esters der Acrylsäure oder Methacrylsäure oder eines Gemisches aus solchen Monomeren,
(b) 32 bis 84 Gew.-%, vorzugsweise 32 bis 63 Gew.-%, eines von (a) verschiedenen aliphatischen oder cycloaliphatischen Esters der Acrylsäure oder Methacrylsäure mit vorzugsweise mindestens 4 C-Atomen im Alkoholrest oder eines Gemisches aus solchen Monomeren,
(c) 0 bis 2 Gew.-%, vorzugsweise 0 bis 1 Gew.-%, einer ethylenisch ungesättigten Carbonsäure oder einer Mischung aus ethylenisch ungesättigten Carbonsäuren und
(d) 0 bis 30 Gew.-%, vorzugsweise 0 bis 20 Gew.-%, eines von (a), (b) und (c) verschiedenen ethylenisch ungesättigten Monomers oder eines Gemisches aus solchen Monomeren

zu einem Polyacrylatharz mit einer Säurezahl von 0 bis 15, vorzugsweise 0 bis 8, einer Hydroxylzahl von 80 bis 140, vorzugsweise 80 bis 120, und einem zahlenmittleren Molekulargewicht von 1.500 bis 10.000, vorzugsweise 2.000 bis 5.000 polymerisiert werden, wobei die Summe der Gewichtsanteile der Komponenten (a), (b), (c) und (d) stets 100 Gew.-% ergibt.

**2.** Beschichtungstoff nach Anspruch 1, **dadurch gekennzeichnet, daß** die Harnstoffe und/oder Harnstoffderivate erhältlich sind durch Umsetzung mindestens einer isocyanatgruppenhaltigen Verbindung, vorzugsweise einem Diisocyanat, mit einem primären oder sekundären Amin oder einer Mischung solcher Amine und/oder Wasser, vorzugsweise mit einem aliphatischen, primären Monoamin.

**3.** Beschichtungstoff nach Anspruch 1 oder 2, **dadurch gekennzeichnet, daß** er zusätzlich eine modifizierte, pyrogene, vorzugsweise hydrophobe, Kieselsäure als Thixotropiermittel enthält.

**4.** Beschichtungsstoff nach einem der Ansprüche 1 bis 3, **dadurch gekennzeichnet, daß** als Vernetzungsmittel mindestens ein unblockiertes oder blockiertes Polyisocyanat, Tris(alkoxycarbonylamino)triazin, Aminoplastharz, beta-Hydroxyalkylamid, Siloxan und/oder Polyanhydrid verwendet wird oder werden.

**5.** Beschichtungstoff nach einem der Ansprüche 1 bis 4, **dadurch gekennzeichnet, daß** das Netzmittel **dadurch** erhältlich ist, daß Polyisocyanate mit einer mittleren Funktionalität von 2,5 bis 6

a) in einer ersten Stufe mit Monohydroxyverbindungen der Formel Y-OH, wobei Y sein kann:

i) ein aliphatisches und/oder cycloaliphatisches $C_8$-$C_{30}$ Kohlenwasserstoffradikal, ggf. mit durch Halogenatome und/oder Arylresten substituierten Wasserstoffatomen, und/oder

ii) ein aliphatisches und/oder cycloaliphatisches und/oder aromatisches Radikal, welches zumindest eine -O- und/oder -COO- Gruppe enthält und ein Molekulargewicht von 350 bis 8000 aufweist, ggf. mit durch Halogenatome und/oder Arylresten substituierten Wasserstoffatomen;

in einer solchen Menge umgesetzt werden, daß 15 bis 50%, vorzugsweise 20 bis 40% oder 20 bis 35% der NCO-Gruppen umgesetzt sind;

b) das in Stufe a) erhaltende Reaktionsprodukt mit Verbindungen der Formel G-$(E)_n$ (E ist -OH, -$NH_2$ und/oder -NHR [R=$C_1$-$C_4$-Alkyl]; n ist 2 oder 3; G ist ein aliphatisches und/oder cycloaliphatisches Kohlenwasserstoffradikal mit zumindest zwei C-Atomen und mit einem Molekulargewicht von höchstens 3000, wobei G eine -O-, COO-, CONH- -S- und/oder -$SO_2$ Gruppe enthalten kann) in einer solchen Menge umgesetzt wird, daß weitere 15 bis 45%, vorzugsweise 20 bis 40% oder 20 bis 35% der NCO-Gruppen der ursprünglich eingesetzten Polyisocyanate umgesetzt sind und die Summe der in den Stufen a) und b) umgesetzten NCO-Gruppen 40 bis 75%, vorzugsweise 45 bis 65% oder 45 bis 55% NCO-Gruppen der ursprünglich eingesetzten Polyisocyanate beträgt;

c) das in Stufe b) erhaltene Reaktionsprodukt mit Verbindungen der Formel Z-Q (Q ist -OH, NH2, -NHR [R ist $C_1$-$C_4$-Alkyl] oder -SH; Z ist $C_2$-$C_{10}$-Alkyl mit mindestens einer tertiären Amingruppe oder eine heterocyclische Gruppe mit mindestens einem basischen Ringstickstoffatom, welches kein Wasserstoffatom trägt, wobei die heterocyclische Gruppe über eine Alkylengruppe mit bis zu 10 C-Atomen an Q gebunden sein kann) in einer solchen Menge umgesetzt wird, daß auf jede verbleibende in den Stufen a) und b) noch nicht umgesetzte Isocyanatgruppe mindestens ein Molekül der Verbindung Z-Q entfällt.

**6.** Beschichtungstoff nach einem der Ansprüche 1 bis 5, **dadurch gekennzeichnet, daß** es ein nichtwäßriges Beschichtungstoff, vorzugsweise ein nichtwäßriger, transparenter Glanzklarlack, ist.

**7.** Verfahren zur Herstellung eines Beschichtungstoffs nach einem der Ansprüche 1 bis 6, wobei

A) ein Bindemittel hergestellt wird,

B) die Herstellung des erfindungsgemäß zu verwendenden Harnstoffderivats in Gegenwart zumindest einer Teilmenge des Bindemittels aus Stufe A) durchgeführt wird und

C) die Mischung aus Bindemittel und Harnstoffderivat

- vor, während oder nach der Stufe B) mit dem erfindungsgemäß zu verwendenden Netzmittel,
- gegebenenfalls mit einer Anreibung (Paste) einer Kieselsäure mit einer ersten Teilmenge eines optional vom Bindemittel aus Stufe A) verschiedenen Bindemittels, vorzugsweise eines Polyacrylatharzes der vorstehend beschriebenen Art,
- mit einem Vernetzungsmittel oder einer Mischung aus Vernetzungsmitteln und, optional,

- mit mindestens einem der vorstehend beschriebenen Lackadditive,
- mit mit Polyacrylaten verträglichen, von den vorstehend angegebenen Bindemitteln verschiedenen Bindemitteln und
- gegebenenfalls mit der Restmenge der mit dem Bindemittel angeriebenen Kieselsäure

gemischt und auf eine zur Verarbeitung üblichen Viskosität eingestellt wird;

wobei das Vernetzungsmittel oder die Mischung von Vernetzungsmitteln gleichzeitig oder erst unmittelbar vor einer Applikation des Beschichtungstoffs zugegeben werden kann.

**8.** Verwendung eines Beschichtungstoffs nach einem der Ansprüche 1 bis 6 zur Herstellung eines Glanzklarlacküberzuges über einem farb- und/oder effektgebenden Basislacküberzug.

**9.** Verfahren zur Herstellung einer zweischichtigen Decklackierung auf einer Substratoberfläche, bei dem

(1) ein mit farb- und/oder effektgebenden Pigmenten versehener Basislack auf die Substratoberfläche aufgebracht wird,
(2) die in Stufe (1) aufgebrachte Basislackschicht bei Temperaturen zwischen 15°C und 100°C, vorzugsweise zwischen 20°C und 85°C, getrocknet wird,
(3) auf die in Stufe (2) getrocknete Basislackschicht ein transparenter Beschichtungstoff gemäß einem der Ansprüche 1 bis 6 als Klarlackschicht aufgebracht wird und anschließend
(4) Basislackschicht und Decklackschicht zusammen eingebrannt werden.

## Claims

**1.** Coating material comprising a binder and a crosslinking agent and also a thixotropic agent based on ureas and/or urea derivatives, **characterized in that** the coating material further comprises a wetting agent which improves the wettability of the thixotropic agent and **in that** the binder is a polyacrylate resin preparable by polymerizing

(a) from 16 to 51% by weight, preferably from 16 to 28% by weight, of a hydroxyl-containing ester of acrylic acid or methacrylic acid.or a mixture of such monomers,
(b) from 32 to 84% by weight, preferably from 32 to 63% by weight, of a non- (a) aliphatic or cycloaliphatic ester of acrylic acid or methacrylic acid having preferably at least 4 carbon atoms in the alcohol residue or a mixture of such monomers,
(c) from 0 to 2% by weight, preferably from 0 to 1% by weight, of an ethylenically unsaturated carboxylic acid or a mixture of ethylenically unsaturated carboxylic acids, and
(d) from 0 to 30% by weight, preferably from 0 to 20% by weight, of a non- (a) , -(b) and -(c) ethylenically unsaturated monomer or a mixture of such monomers to give a polyacrylate resin having an acid number of from 0 to 15, preferably from 0 to 8, a hydroxyl number of from 80 to 140, preferably from 80 to 120, and a number-average molecular weight of from 1500 to 10,000, preferably from 2000 to 5000, the sum of the weight fractions of components (a), (b), (c) and (d) always being 100% by weight.

**2.** Coating material according to Claim 1, **characterized in that** the ureas and/or urea derivatives are obtainable by reaction of at least one isocyanato-containing compound, preferably a diisocyanate, with a primary or secondary amine or a mixture of such amines and/or water, preferably with an aliphatic, primary monoamine.

**3.** Coating material according to Claim 1 or 2, **characterized in that** it further comprises a modified, pyrogenic, preferably hydrophobic, silica as thixotropic agent.

**4.** Coating material according to any of Claims 1 to 3, **characterized in that** as crosslinking agent(s) at least one unblocked or blocked polyisocyanate, tris(alkoxycarbonylamino)triazine, amino resin, beta-hydroxyalkylamide, siloxane and/or polyanhydride is/are used.

**5.** Coating material according to any of Claims 1 to 4, **characterized in that** the wetting agent is obtainable by reacting polyisocyanates having an average functionality of from 2.5 to 6

a) in a first stage with monohydroxy compounds of the formula Y-OH, it being possible for Y to be:

i) an aliphatic and/or cycloaliphatic $C_8$-$C_{30}$ hydrocarbon radical, with or without hydrogen atoms substituted by halogen atoms and/or aryl radicals, and/or

ii) an aliphatic and/or cycloaliphatic and/or aromatic radical which contains at least one -O- and/or -COO- group and has a molecular weight of from 350 to 8000, with or without hydrogen atoms substituted by halogen atoms and/or aryl radicals;

in an amount such that from 15 to 50%, preferably from 20 to 40% or from 20 to 35%, of the NCO groups undergo reaction;

b) reacting the reaction product obtained in stage a) with compounds of the formula G-$(E)_n$ (E is -OH, -$NH_2$ and/or -NHR [R=$C_1$-$C_4$ alkyl] ; n is 2 or 3; G is an aliphatic and/or cycloaliphatic hydrocarbon radical having at least two carbon atoms and a molecular weight of not more than 3000, it being possible for G to contain an -O-, COO-, CONH-, -S- and/or -$SO_2$ group) in an amount such that a further from 15 to 45%, preferably from 20 to 40% or from 20 to 35%, of the NCO groups of the polyisocyanates used originally undergo reaction and the sum of the NCO groups reacted in stages a) and b) is from 40 to 75%, preferably from 45 to 65% or from 45 to 55%, of the NCO groups of the polyisocyanates used originally;

c) reacting the reaction product obtained in stage b) with compounds of the formula Z-Q (Q is -OH, $NH_2$, -NHR [R is $C_1$-$C_4$ alkyl]or -SH; Z is $C_2$-$C_{10}$ alkyl containing at least one tertiary amine group or is a heterocyclic group having at least one basic ring nitrogen atom which carries no hydrogen atom, it being possible for the heterocyclic group to be attached to Q by way of an alkylene group having up to 10 carbon atoms) in an amount such that there is at least one molecule of the compound Z-Q for each remaining isocyanate group which has not reacted in stages a) and b).

**6.** Coating material according to any of Claims 1 to 5, **characterized in that** it is a nonaqueous coating material, preferably a nonaqueous, transparent gloss clearcoat material.

**7.** Process for preparing a coating material according to any of Claims 1 to 6, wherein

A) a binder is prepared,

B) the urea derivative for use in accordance with the invention is prepared in the presence of at least a portion of the binder from stage A), and

C) the mixture of binder and urea derivative is mixed

- before, during or after stage B) with the wetting agent for use in accordance with the invention,
- if desired, with a paste of a silica containing a first portion of a binder which is optionally different from the binder from stage A), preferably a polyacrylate resin of the type described above,
- with a crosslinking agent or a mixture of crosslinking agents and, optionally,
- with at least one of the above-described coatings additives,
- with polyacrylate-compatible binders different from the binders indicated above, and
- if desired, with the remaining portion of the silica pasted with the binder

and adjusted to a customary processing viscosity;

it being possible to add the crosslinking agent or the mixture of crosslinking agents simultaneously or not until immediately before an application of the coating material.

**8.** Use of a coating material according to any of Claims 1 to 6 for producing a gloss clearcoat finish over a colour

and/or effect basecoat finish.

**9.** Process for producing a two-coat topcoat on a substrate surface, which comprises

(1) applying a basecoat material provided with colour and/or effect pigments to the substrate surface,
(2) drying the basecoat film applied in stage (1) at temperatures between 15°C and 100°C, preferably between 20°C and 85°C,
(3) applying to the basecoat film dried in stage (2) a transparent coating material according to any of Claims 1 to 6, as a clearcoat film, and subsequently
(4) baking basecoat film and topcoat film together.

## Revendications

**1.** Matière de revêtement contenant un liant et un agent de réticulation ainsi qu'un agent de thixotropie à base d'urées et/ou de dérivés d'urées, **caractérisée en ce que** la matière de revêtement contient en outre un agent mouillant améliorant la mouillabilité de l'agent de thixotropie et **en ce que** le liant est une résine polyacrylate qui peut être préparée par polymérisation de

(a) 16 à 51 % en poids, de préférence 16 à 28 % en poids, d'un ester contenant des groupes hydroxy de l'acide acrylique ou de l'acide méthacrylique ou d'un mélange de tels monomères,
(b) 32 à 84 % en poids, de préférence 32 à 63 % en poids, d'un ester aliphatique ou cycloaliphatique de l'acide acrylique ou de l'acide méthacrylique, différent de (a) et comportant de préférence au moins 4 atomes de carbone dans le reste alcool, ou d'un mélange de tels monomères,
(c) 0 à 2 % en poids, de préférence 0 à 1 % en poids, d'un acide carboxylique à insaturation éthylénique ou d'un mélange d'acides carboxyliques à insaturation éthylénique, et
(d) 0 à 30 % en poids, de préférence 0 à 20 % en poids, d'un monomère à insaturation éthylénique, différent de (a), (b) et (c) ou d'un mélange de tels monomères, en une résine polyacrylate ayant un indice d'acide de 0 à 15, de préférence de 0 à 8, un indice de groupes hydroxy de 80 à 140, de préférence de 80 à 120, et une masse moléculaire moyenne en nombre de 1 500 à 10 000, de préférence de 2 000 à 5 000, la somme des parties en poids des composants (a), (b), (c) et (d) donnant toujours 100 % en poids.

**2.** Matière de revêtement selon la revendication 1, **caractérisée en ce que** les urées et/ou les dérivés d'urées peuvent être obtenus par la réaction d'au moins un composé contenant des groupes isocyanate, de préférence un diisocyanate, avec une amine primaire ou secondaire ou un mélange de telles amines et/ou d'eau, de préférence avec une monoamine aliphatique primaire.

**3.** Matière de revêtement selon la revendication 1 ou 2, **caractérisée en ce qu'**elle contient en outre comme agent de thixotropie un acide silicique pyrogéné, modifié, de préférence hydrophobe.

**4.** Matière de revêtement selon l'une quelconque des revendications 1 à 3, **caractérisée en ce qu'**on utilise comme agent de réticulation au moins un polyisocyanate bloqué ou non bloqué, une tris(alcoxycarbonylamino)triazine, un aminoplaste, un β-hydroxyalkylamide, un siloxane et/ou un polyanhydride.

**5.** Matière de revêtement selon l'une quelconque des revendications 1 à 4, **caractérisée en ce que** l'agent mouillant peut être obtenu en faisant réagir des polyisocyanates ayant une fonctionnalité moyenne de 2,5 à 6,

a) dans une première étape, avec des composés monohydroxylés de formule Y-OH, Y pouvant être

i) un radical hydrocarboné aliphatique et/ou cycloaliphatique en $C_8$-$C_{30}$, comportant éventuellement des atomes d'hydrogène substitués par des atomes d'halogène et/ou des radicaux aryle; et/ou
ii) un radical aliphatique et/ou cycloaliphatique et/ou aromatique qui contient au moins un groupe -O- et/ou -COO- et présente une masse moléculaire de 350 à 8 000, qui comporte éventuellement des atomes d'hydrogène substitués par des atomes d'halogène et/ou des radicaux aryle ;

en une quantité telle que 15 à 50 %, de préférence 20 à 40 % ou 20 à 35 % des groupes NCO aient réagi ;
b) en faisant réagir le produit de réaction, obtenu dans l'étape a), avec des composés de formule G-$(E)_n$ (E

est -OH, $-NH_2$ et/ou -NHR [R = un groupe alkyle en $C_1$-$C_4$] ; n est 2 ou 3 ; G est un radical hydrocarboné aliphatique et/ou cycloaliphatique comportant au moins deux atomes de carbone et ayant une masse moléculaire de 3 000 au maximum, G pouvant contenir un groupe -O-, COO-, CONH-, -S-et/ou $-SO_2$) en une quantité telle qu'encore 15 à 45 %, de préférence 20 à 40 % ou 20 à 35 % des groupes NCO des polyisocyanates utilisés initialement aient réagi, et que la somme des groupes NCO ayant réagi dans les étapes a) et b) représente de 40 à 75 %, de préférence de 45 à 65 % ou de 45 à 55 % des groupes NCO des polyisocyanates utilisés initialement.;

c) en faisant réagir le produit de réaction, obtenu dans l'étape b), avec des composés de formule Z-Q (Q est -OH, $NH_2$, -NHR [R est un groupe alkyle en $C_1$-$C_4$] ou -SH ; Z est un groupe alkyle en $C_2$-$C_{10}$ comportant au moins un groupe amino tertiaire ou un groupe hétérocyclique comportant au moins un atome d'azote basique dans le cycle, qui ne porte pas d'atomes d'hydrogène, le groupe hétérocyclique pouvant être lié à Q par un groupe alkylène ayant jusqu'à 10 atomes de carbone) en une quantité telle que pour chaque groupe isocyanate n'ayant pas encore réagi, restant dans les étapes a) et b), il y a au moins une molécule du composé Z-Q.

**6.** Matière de revêtement selon l'une quelconque des revendications 1 à 5, **caractérisée en ce qu'**il s'agit d'une matière de revêtement non aqueuse, de préférence d'un vernis brillant transparent non aqueux.

**7.** Procédé pour la préparation d'une matière de revêtement selon l'une quelconque des revendications 1 à 6, dans lequel

A) on prépare un liant,
B) on effectue la préparation de dérivés d'urée à utiliser selon l'invention, en présence d'au moins une quantité partielle du liant provenant de l'étape A) et
C) on mélange le mélange de liant et de dérivés d'urée

- avant, pendant ou après l'étape B), avec l'agent de réticulation à utiliser selon l'invention,
- éventuellement avec une pâte d'un acide silicique avec une première quantité partielle d'un liant, éventuellement différent du liant de l'étape A), de préférence d'une résine polyacrylate du type décrit précédemment,
- avec un agent de réticulation ou un mélange d'agents de réticulation et, éventuellement,
- avec au moins l'un des additifs pour peintures décrits précédemment,
- avec des liants compatibles avec des polyacrylates, différents des liants indiqués précédemment, et
- éventuellement avec la quantité résiduelle de l'acide silicique mis sous forme de pâte avec le liant,

et on ajuste le mélange à une viscosité usuelle pour la mise en oeuvre ;

l'agent de réticulation ou le mélange d'agents de réticulation pouvant être ajouté simultanément ou seulement immédiatement avant une application de la matière de revêtement.

**8.** Utilisation d'une matière de revêtement selon l'une quelconque des revendications 1 à 6, pour la production d'un revêtement de vernis brillant sur une peinture de base colorée et/ou à effet.

**9.** Procédé pour la production d'un revêtement de peinture de finition en deux couches sur la surface d'un subjectile, dans lequel

(1) on applique sur la surface du subjectile une peinture de base munie de pigments colorés et/ou à effet,
(2) la couche de peinture de base appliquée dans l'étape (1) est séchée à des températures comprises entre 15°C et 100°C, de préférence entre 20°C et 85°C,
(3) on applique sur la couche de peinture de base séchée dans l'étape (2) une matière de revêtement transparente selon l'une quelconque de revendications 1 à 6, en tant que couche de vernis, et ensuite
(4) couche de peinture de base et couche de peinture de finition sont séchées au four ensemble.